# FASCICULE DE BREVET EUROPEEN

(11) **EP 3 884 807 B1**
(45) Date de publication et mention de la délivrance du brevet: **23.08.2023**
(21) Numéro de dépôt: 21165245.8
(22) Date de dépôt: 26.03.2021
(51) Int. Cl.: A45F 4/02, A45F 3/04, A41D 13/018, B62J 27/20, B62J 45/40

(54) **SYSTÈME DE PROTECTION ET UTILISATION METTANT EN OEUVRE UN TEL SYSTÈME DE PROTECTION**
SCHUTZSYSTEM UND ANWENDUNG ZUR UMSETZUNG EINES SOLCHEN SCHUTZSYSTEMS
PROTECTION SYSTEM AND USE IMPLEMENTING SUCH A PROTECTION SYSTEM

(30) Priorité: 27.03.2020 FR 2003066
(43) Date de publication de la demande: 29.09.2021
(73) Titulaire: Helite, 21121 Fontaine-les-Dijon (FR)
(72) Inventeur: THEVENOT, Gérard, 21380 Messigny et Vantoux (FR); AFONSO, Marie-Hélène, 21000 Dijon (FR); LAYLE, Barbara, 21600 Longvic (FR); QUEDDIS, Hicham, 21000 Dijon (FR); FLEURANCE, Anne-Laure, 21000 Dijon (FR); BAVEREL, Camille, 21000 Dijon (FR); BEGUE, Emanuele, 21600 Fenay (FR); BOGNI, Hubert, 21540 Echannay (FR); PINTO, Patrick, 71230 Pouilloux (FR); MAIRET, Isabelle, 21800 Quetigny (FR)
(74) Mandataire: Plasseraud IP

(56) Documents cités:
- WO-A1-2013/107951
- CN-U- 205 696 363
- JP-A- 2003 312 569
- JP-A- 2006 081 746
- US-A- 5 746 442

## Description

### Domaine technique

La présente invention se rapporte à un système de protection destiné à être porté par un individu et à une utilisation mettant en oeuvre un tel système de protection.

### Technique antérieure

L'invention s'applique à la protection d'un individu circulant sur un véhicule offrant une protection incomplète à l'individu en cas d'accident. Le véhicule peut par exemple être dépourvu de carrosserie, ou présenter une carrosserie partielle, c'est-à-dire que le véhicule est en partie ouvert sur l'extérieur. Le véhicule peut par exemple être une trottinette, un vélo, une moto, un scooter, une mobylette, un tricycle à carrosserie, un vélo cargo ou autres.

Ces véhicules constituent des alternatives à la voiture pour se déplacer et connaissent un succès grandissant, notamment en milieu urbain. Mais ces véhicules sont soumis aux dangers de la circulation, et ils se retrouvent régulièrement impliqués dans des accidents de la circulation

Or, en cas d'accident, les individus sont peu protégés par le véhicule lui-même, voire ne sont pas protégés par le véhicule lui-même. Les individus sont donc particulièrement vulnérables en cas d'accident.

L'invention s'applique également à la protection d'un individu se trouvant dans une situation à risque en dehors de toute circulation sur un véhicule. Cela peut concerner des ouvriers travaillant sur un chantier, notamment pour un ouvrier travaillant sur le réseau routier, ou travaillant en hauteur. Cela peut également concerner des individus dans le cadre d'une pratique sportive ou à sensation.

En effet, lorsque les individus se trouvent dans une situation à risque, ils ne sont pas protégés, et sont donc particulièrement vulnérables en cas d'accident.

L'invention s'applique aussi à la protection d'un individu souffrant de troubles susceptibles d'occasionner des chocs, tels qu'une perte de connaissance ou une crise d'épilepsie. En cas de chocs, les individus ne sont pas protégés.

Il existe donc un besoin d'améliorer la sécurité des individus utilisant ces véhicules ou se trouvant dans une situation à risque ou souffrant de troubles susceptibles d'occasionner des chocs.

On connait des équipements de protection portatifs permettant de protéger l'individu en cas d'accident. Par exemple, le document WO2014/125368 décrit une veste présentant une doublure comportant des coussins gonflables qui sont gonflés lorsqu'une situation d'accident est détectée. Les coussins gonflés viennent alors protéger l'utilisateur contre d'éventuels chocs.

Dans un autre exemple, présenté dans le document JP 2003 312569 A, qui divulgue un système de protection selon le préambule de la revendication 1, il est décrit un airbag positionné dans une structure destinée à être portée par un motard. L'airbag comporte une partie s'étendant au niveau des épaules et de la poitrine du motard à l'état gonflé.

Cependant, de telles protections n'offrent pas une protection totale de l'individu, en particulier elles ne permettent pas de protéger à la fois le thorax, le visage et le cou de l'individu. L'individu reste alors encore exposé en cas d'accident. Ainsi, ces protections peuvent encore être optimisées pour protéger davantage l'individu.

Il existe donc un besoin de trouver un système de protection qui offre une meilleure protection de l'individu.

### Résumé

L'invention vise à répondre au besoin évoqué ci-dessus.
A cet effet, selon un premier aspect, l'invention prévoit un système de protection tel que défini dans la revendication 1.

Ainsi, les première et deuxième portions de protection latérales, positionnées de chaque côté de la tête de l'individu, par exemple au niveau des joues de l'individu, permettent de protéger la tête de l'individu en cas de chute ou d'accident, en venant s'opposer au mouvement de la tête selon la direction transversale.

De plus, le positionnement à distance des premier et deuxième éléments de protection des première et deuxième portions de protection latérales à l'état actif de la structure de protection permet aux première et deuxième portions de protection latérales d'être correctement positionnées par rapport à la tête de l'individu. En effet, à l'état inactif de la structure de protection, la première portion de protection latérale et la deuxième portion de protection latérale sont repliées sur le premier élément de revêtement scapulaire et sur le deuxième élément de revêtement scapulaire, et sont à proximité des épaules de l'individu. A l'état actif de la structure de protection, la première portion de protection latérale et la deuxième portion de protection latérale doivent atteindre la hauteur des côtés de la tête de l'individu, par exemple au niveau des joues. La distance introduite entre les première et deuxième portions de protection latérales avec les premier et deuxième éléments de revêtement scapulaires ou autrement dit, le fait que les première et deuxième portions de protection latérales ne soient pas en contact avec les premier et deuxième éléments de revêtement scapulaires, permet aux première et deuxième portions de protection latérales d'atteindre cette hauteur. Les première et deuxième portions de protection latérales sont alors bien positionnées en regard des côtés de la tête de l'individu, et non pas en regard du cou de l'individu. La protection de la tête de l'individu, et en particulier la protection transversale de la tête de l'individu, est ainsi améliorée.

De plus, à l'état actif, l'agencement à angle droit entre le premier manchon de protection latérale et le premier manchon de protection frontale d'une part, et le deuxième manchon de protection latérale et le deuxième manchon de protection frontale d'autre part permet à la structure de protection d'être compacte et stable.

A l'état actif de la structure de protection, la structure de protection est solidarisée à l'équipement grâce à la zone d'accueil thoracique de chacune des première et deuxième portions de protection frontales, et la zone d'accueil faciale de chacune des première et deuxième portions de protection frontale n'est plus en contact avec les premier et deuxième éléments de revêtement frontaux. L'agencement à distance de la zone d'accueil faciale de chacune des première et deuxième portions de protection des premier et deuxième éléments de revêtement frontaux permet à la zone d'accueil faciale de se déployer suffisamment pour atteindre le visage de l'individu.

Les première et deuxième portions de protection frontales permettent d'améliorer la protection de l'individu, puisque la zone d'accueil thoracique de chacune des première et deuxième portions de protection frontales permet de protéger le thorax de l'individu et la zone d'accueil faciale de chacune des première et deuxième portions de protection frontales permet de protéger davantage la tête de l'individu en permettant de protéger son visage. En particulier, la zone d'accueil faciale peut couvrir le visage entre le menton et les yeux de l'individu, voire entre le menton et le front de l'individu.

Par ailleurs, les première et deuxième portions de protection latérales et les première et deuxième portions de protection frontales permettent ensemble de renforcer le maintien de la tête, la protection du cou de l'individu est ainsi également renforcée.

L'attache amovible permet de solidariser la première portion de protection frontale et la deuxième portion de protection frontale, et permet d'éviter que la première portion de protection frontale et la deuxième portion de protection frontale ne s'écartent d'une distance supérieure à la largeur de la tête de l'individu, à l'état actif de la structure de protection, lorsque l'individu vient les percuter, afin d'assurer la meilleure protection possible.

La portion de protection occipitale vient compléter la protection de la tête de l'individu. A l'état inactif de la structure de protection, elle est repliée sur l'équipement et elle se déploie à l'état actif de la structure de protection pour protéger l'arrière de la tête de l'individu, et en particulier, la partie arrière de la tête située au-dessus des vertèbres cervicales.

Selon une variante de l'invention, la structure de protection comprend au moins un coussin de protection dorsal configuré pour s'étendre à l'état actif en regard d'une partie du dos de l'individu, et l'équipement comporte une partie d'équipement dorsale configurée pour s'étendre en regard du dos de l'individu, le coussin de protection dorsal étant replié sur la partie d'équipement dorsale à l'état inactif de la structure de protection.

Le coussin de protection dorsal vient ainsi compléter la protection de l'individu. Le coussin de protection dorsal permet de protéger le dos de l'individu.

En particulier, le coussin de protection dorsal peut être intégré dans la partie d'équipement dorsale.

Selon une variante de l'invention, l'équipement est un sac à dos comprenant une poche dorsale, et des bretelles attachées à la poche dorsale, la partie d'équipement supérieure s'étendant au moins sur une partie des bretelles et la partie d'équipement dorsale s'étendant au moins sur une partie de la poche dorsale.

Le système de protection est alors adapté à un grand nombre d'individus, même s'ils ont des tailles différentes.

Selon une variante de l'invention, le système de protection comprend un organe de retenue frontal solidarisé à la première portion de protection frontale et à la deuxième portion de protection frontale, l'organe de retenue frontal étant configuré pour être tendu entre la première portion de protection frontale et la deuxième portion de protection frontale, et pour former un panneau de protection frontale, à l'état actif de la structure de protection.

Ainsi, en cas d'accident, l'organe de retenue frontal formant un panneau de protection frontale entre la première portion de protection frontale et la deuxième portion de protection frontale permet de recevoir la tête de l'individu. Ainsi, l'organe de retenue frontal empêche la tête de l'individu de passer entre la première portion de protection frontale et la deuxième portion de protection frontale. La protection de la tête de l'individu est renforcée.

Selon une variante de l'invention, pour chacune des première et deuxième portions de protection frontales, la zone d'accueil faciale présente une surface de confort présentant une élasticité supérieure à l'élasticité de la zone d'accueil thoracique.

L'élasticité supérieure de la surface de confort permet de donner une forme arrondie à la protection. Ainsi, lorsque le visage de l'individu entre en contact avec la surface de confort de la zone d'accueil faciale, le choc est en partie amorti par la surface de confort, ce qui limite le choc reçu au visage par l'individu.

Selon une variante de l'invention, la structure de protection forme une enveloppe délimitant une unique chambre intérieure, la chambre intérieure étant remplie d'un gaz dans l'état actif de la structure de protection, et étant vide dans l'état inactif de la structure de protection.

La structure de protection peut ainsi être déployée entièrement sur réception d'un unique signal de déclenchement. Ainsi, toute la structure de protection peut être déployée simultanément.

Selon une variante de l'invention, le système de protection comprend au moins un réservoir de gaz et un dispositif d'actionnement connecté au réservoir de gaz et à la structure de protection, le dispositif d'actionnement étant configuré pour détecter une situation d'accident et pour laisser la structure de protection dans l'état inactif tant qu'aucune situation d'accident n'est détectée, la structure de protection étant isolée par rapport au réservoir de gaz, et faire passer la structure de protection dans l'état actif lorsqu'une situation d'accident est détectée, la structure de protection étant en communication de fluide avec le réservoir.

Selon une variante de l'invention, l'équipement comprend un étui s'étendant sur la partie d'équipement supérieure, l'étui comprenant des rabats et étant configuré pour présenter un état fermé dans lequel les rabats sont solidarisés l'un à l'autre pour délimiter un espace de réception, et un état ouvert dans lequel les rabats sont écartés l'un de l'autre pour ouvrir l'espace de réception, et dans lequel :
- dans l'état inactif de la structure de protection, l'étui est dans l'état fermé et le coussin de protection supérieur est placé dans l'espace de réception, et
- dans l'état actif de la structure de protection, l'étui est dans l'état ouvert et laisse passer le coussin de protection supérieur.

Le coussin de protection supérieur est ainsi protégé dans l'étui à l'état inactif de la structure de protection, et peut se déployer en écartant les rabats à l'état actif de la structure de protection.

Selon un deuxième aspect de l'invention tel que défini dans la revendication 9, il est proposé une utilisation d'un système de protection selon l'invention pour protéger un individu portant le système de protection.

### Brève description des dessins

D'autres caractéristiques, détails et avantages apparaîtront à la lecture de la description détaillée ci-après, et à l'analyse des dessins annexés, sur lesquels :
[Fig. 1] La figure 1 montre une vue de profil d'un individu sur un vélo portant un système de protection selon l'invention, comprenant un équipement et une structure de protection, la structure de protection étant dans l'état inactif et étant dégonflée et repliée sur l'équipement ;
[Fig. 2] La figure 2 montre une vue de profil d'un individu sur un vélo portant le système de protection de la figure 1, la structure de protection étant dans l'état actif et étant gonflée ;
[Fig. 3] La figure 3 montre une vue de profil du système de protection de la figure 1, la structure de protection étant à l'état actif et présentant un coussin de protection dorsal et un coussin de protection supérieur ;
[Fig. 4] La figure 4 montre une vue de face d'un individu portant le système de protection de la figure 1, la structure de protection étant dans l'état actif et présentant des première et deuxième portions de protection latérales et des première et deuxième portions de protection frontales ;
[Fig. 5] La figure 5 montre une vue de dos d'un individu portant le système de protection de la figure 1, la structure de protection étant dans l'état actif et présentant une portion de protection occipitale et un coussin de protection dorsal ;
[Fig. 6] La figure 6 montre un détail du système de protection de la figure 1, repéré sur la figure 3 par l'encadré VI, représentant une partie de l'étui dans lequel est replié le coussin de protection supérieur ;

### Description des modes de réalisation

Sur les figures, les mêmes références désignent des éléments identiques ou analogues.

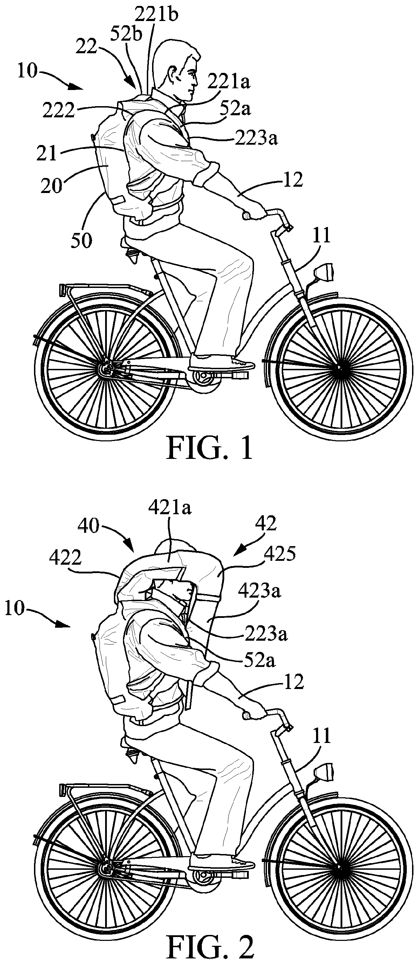

Les figures 1 et 2 représentent un individu 12 sur un vélo 11. L'individu 12 porte un système de protection 10 comprenant un équipement 20 et une structure de protection 40 gonflable.

Dans la suite de la description, les directions et les sens seront donnés par rapport à l'individu 12. La direction verticale est donnée par la hauteur de l'individu 12 et orientée de bas en haut depuis les pieds jusqu'à la tête de l'individu 12. La direction longitudinale, perpendiculaire à la direction verticale est donnée par la direction allant d'arrière en avant de l'individu 12 orientée depuis le dos jusqu'au thorax de l'individu 12. La direction transversale, perpendiculaire aux directions verticale et longitudinale est donnée par la direction allant d'une épaule à l'autre de l'individu 12, orientée de droite à gauche depuis l'épaule droite jusqu'à l'épaule gauche de l'individu 12.

La figure 1 représente un cas dans lequel aucune situation d'accident n'a été détectée. La structure de protection 40 gonflable présente un état inactif dans lequel elle est dégonflée et repliée sur l'équipement 20.

La figure 2 représente un cas dans lequel une situation d'accident est détectée. La structure de protection 40 présente alors un état actif dans lequel elle est gonflée.

L'équipement 20 représenté est un sac à dos 50. Dans une alternative non représentée, l'équipement 20 pourrait être un vêtement tel qu'une veste ou une écharpe.

L'équipement 20 comprend une partie d'équipement dorsale 21 s'étendant en regard du dos de l'individu 12 et une partie d'équipement supérieure 22 en regard d'une partie du buste de l'individu 12.

La partie d'équipement supérieure 22 comprend un premier élément de revêtement scapulaire 221a positionné en regard de l'épaule droite de l'individu 12, un deuxième élément de revêtement scapulaire 221b positionné en regard de l'épaule gauche de l'individu 12, un élément de revêtement dorsal supérieur 222 positionné en regard du haut du dos de l'individu 12, et des premier 223a et deuxième 223b éléments de revêtement frontaux positionnés en regard du thorax de l'individu 12.

Le sac à dos 50 comprend une poche dorsale 51 et une bretelle droite 52a et une bretelle gauche 52b. La partie d'équipement dorsale 21 s'étend sur une partie de la poche dorsale 51 du sac à dos 50 et la partie d'équipement supérieure 22 s'étend sur une partie des bretelles droite et gauche 52a, 52b du sac à dos 50 ainsi que sur une bande dorsale 52c joignant la bretelle droite 52a et la bretelle gauche 52b.

Le premier élément de revêtement scapulaire 221a est formé sur une partie supérieure de la bretelle droite 52a, le deuxième élément de revêtement scapulaire 221b est formé sur une partie supérieure de la bretelle gauche 52b. L'élément de revêtement dorsal supérieur 222 est formé par la bande dorsale 52c. Le premier élément de revêtement frontal 223a est formé sur une partie inférieure de la bretelle droite 52a et le deuxième élément de revêtement frontal 223b est formé sur une partie supérieure de la bretelle gauche 52b.

La structure de protection 40 comprend un coussin de protection dorsal 41 et un coussin de protection supérieur 42. Le coussin de protection supérieur comprend une première portion de protection latérale 421a et une deuxième portion de protection latérale 421b, une portion de protection occipitale 422, une première portion de protection frontale 423a et une deuxième portion de protection frontale 423b.

Lorsqu'aucune situation d'accident n'est détectée, la première portion de protection latérale 421a est repliée sur le premier élément de revêtement scapulaire 221a et la deuxième portion de protection latérale 421b est repliée sur le deuxième élément de revêtement scapulaire 221b. La portion de protection occipitale 422 est repliée sur l'élément de revêtement dorsal supérieur 222. La première portion de protection frontale 423a est repliée sur le premier élément de revêtement frontal 223a et la deuxième portion de protection frontale 423b est repliée sur le deuxième élément de revêtement frontal 223b. Et, le coussin de protection dorsal 41 est replié sur la partie d'équipement dorsal 21. Le coussin de protection supérieur 42 et le coussin de protection dorsal 41 ne sont alors pas visibles.

Lorsqu'une situation d'accident est détectée, la première portion de protection latérale 421a et la deuxième portion de protection latérale 421b s'étendent de chaque côté de la tête de l'individu 12, par exemple à hauteur de ses joues. La première portion de protection latérale 421a s'étend du côté droit de la tête de l'individu et la deuxième portion de protection latérale 421b s'étend du côté gauche de la tête de l'individu. La portion de protection occipitale 422 s'étend derrière la tête de l'individu 12, au-dessus des vertèbres cervicales de l'individu 12. La première portion de protection frontale 423a et la deuxième portion de protection frontale 423b présentent chacune une zone d'accueil thoracique 424 s'étendant en regard d'une partie du thorax de l'individu 12 et une zone d'accueil faciale 425 s'étendant en regard d'une partie du visage de l'individu 12. Et, le coussin de protection dorsal 41 s'étend en regard d'une partie du dos de l'individu 12.

L'individu dispose alors d'une protection complète. En particulier, la tête de l'individu est protégée de tous les côtés. Les première et deuxième portions de protection latérales 421a, 421b protègent les côtés droit et gauche de l'individu 12, la portion de protection occipitale 422 protège la partie arrière de la tête de l'individu, au-dessus des vertèbres cervicales et les zones d'accueil faciales 425 protègent la partie avant de la tête de l'individu 12, c'est-à-dire le visage de l'individu 12. La tête de l'individu 12 est ainsi maintenue et protégée.

De plus, les zones d'accueil thoraciques 424 protègent le thorax de l'individu et le coussin de protection dorsal 41 protège le dos de l'individu 12. La protection de la tête est donc complétée par la protection du thorax et du dos de l'individu 12.

Par ailleurs, comme la première portion de protection frontale 423a et la deuxième portion de protection frontale 423b s'étendent chacune en regard de l'individu 12 depuis le thorax de l'individu 12 jusqu'au visage de l'individu 12, la première portion de protection frontale 423a et la deuxième portion de protection frontale 423b permettent également de protéger le cou de l'individu 12.

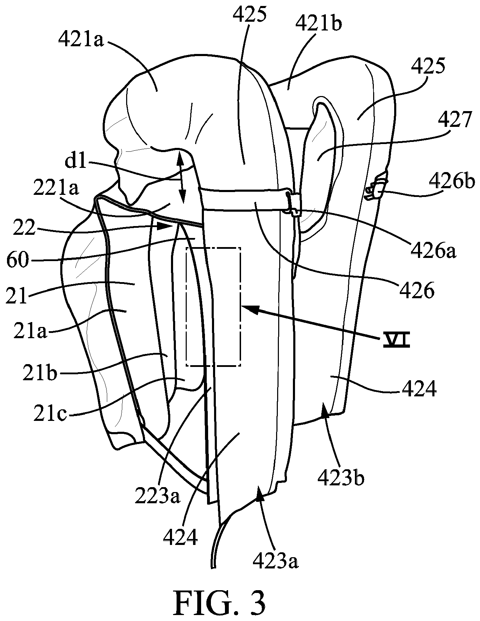

Sur la figure 3 sont représentées la première portion de protection latérale 421a et la deuxième portion de protection latérale 421b, à l'état actif de la structure gonflable 40.

La première portion de protection latérale 421a et la deuxième portion de protection latérale 421b s'étendent principalement selon une direction longitudinale, en regard l'une de l'autre.

La première portion de protection latérale 421a et la deuxième portion de protection latérale 421b s'étendent parallèlement. Dans une variante, la première portion de protection latérale 421a et la deuxième portion de protection latérale 421b pourraient s'étendre en se rapprochant ou en s'écartant l'une de l'autre ou encore en s'inclinant de bas en haut ou de haut en bas.

La première portion de protection latérale 421a et la deuxième portion de protection latérale 421b prennent la forme de manchons tubulaires. En particulier, un premier manchon de protection latérale forme la première portion de protection latérale 421a, et un deuxième manchon de protection latérale forme la deuxième portion de protection latérale 421b.

La première portion de protection latérale 421a est agencée à distance d1 du premier élément de revêtement scapulaire 221a. De façon similaire, mais non visible à la figure 3, la deuxième portion de protection latérale 421b est agencée à distance du deuxième élément de revêtement scapulaire 221b. La première portion de protection latérale 421a, respectivement la deuxième portion de protection latérale 421b, n'est pas en contact avec le premier élément de revêtement scapulaire 221a, respectivement avec le deuxième élément de revêtement scapulaire 221b.

Cette distance d1 permet à la structure de protection 40 d'atteindre la tête de l'individu 12, et de ne pas rester au niveau du cou de l'individu 12. De plus, cette disposition de la structure de protection 40 permet de conserver un encombrement du système de protection 10 restreint. En effet, en laissant une distance entre les premier et deuxième éléments de protection scapulaires 221a, 221b et les première et deuxième portions de protection latérales 421a, 421b, il est possible de protéger la tête sans que la structure de protection ne s'étende entre les épaules et la tête de l'individu, ce qui limite l'encombrement de la structure de protection. Il est ainsi plus facile de replier la structure de protection 40 dans l'équipement 20 à l'état inactif de la structure de protection 40.

La première portion de protection latérale 421a et la deuxième portion de protection latérale 421b comprennent chacune une extrémité avant. L'extrémité avant de la première portion de protection latérale 421a est reliée à la première portion de protection frontale 423a par une extrémité haute de la première portion de protection frontale 423a. De même, l'extrémité avant de la deuxième portion de protection latérale 421b est reliée à la deuxième portion de protection frontale 423b par une extrémité haute de la deuxième portion de protection frontale 423b.

Les première et deuxième portions de protection frontales 423a, 423b s'étendent verticalement, en regard l'une de l'autre.

De plus, les première et deuxième portions de protections frontales 423a, 423b prennent la forme de manchons tubulaires. En particulier, un premier manchon de protection frontale forme la première portion de protection frontale 423a, et un deuxième manchon de protection frontale forme la deuxième portion de protection frontale 423b.

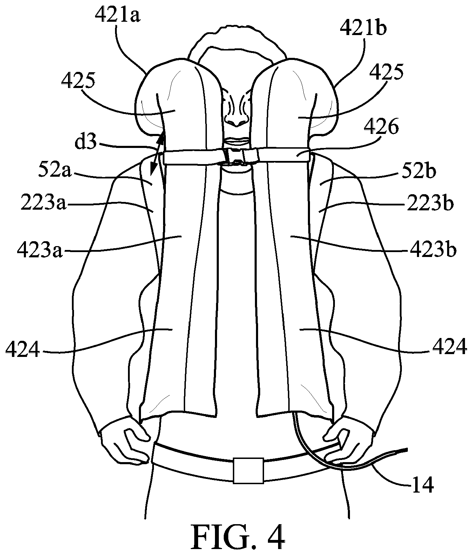

Les première et deuxième portions de protection frontales 423a, 423b sont décrites notamment en relation avec les figures 3 et 4. Le premier manchon de protection latérale forme un angle droit avec le premier manchon de protection frontale, et le deuxième manchon de protection latérale forme un angle droit avec le deuxième manchon de protection frontale.

La zone d'accueil faciale 425 de chacune des première et deuxième portions de protection frontale 423a, 423b est située du côté de l'extrémité haute des première et deuxième portions de protection frontales 423a, 423b.

La zone d'accueil thoracique 424 de chacune des première et deuxième portions de protection frontales 423a, 423b est située du côté d'une extrémité basse, opposée à l'extrémité haute des première et deuxième portions de protection frontales 423a, 423b.

La zone d'accueil thoracique 424 de la première portion de protection frontale 423a est attachée au premier élément de revêtement frontal 223a tandis que la zone d'accueil faciale 425 de la première portion de protection frontale 423a est à distance d3 du premier élément de revêtement frontal 223a. De façon similaire, la zone d'accueil thoracique 424 de la deuxième portion de protection frontale 423b est attachée au deuxième élément de revêtement frontal 223b tandis que la zone d'accueil faciale 425 de la deuxième portion de protection frontale 423b est à distance d3 du deuxième élément de revêtement frontal 223b.

La distance d3 entre les zones d'accueil faciales 425 et les premier et deuxième éléments de revêtement frontal 223a, 223b permet aux zones d'accueil faciales d'être logées dans l'équipement 20, dans les premier et deuxième éléments de revêtement frontal 223a, 223b à l'état inactif de la structure de protection 40 et d'atteindre l'avant de la tête de l'individu 12, c'est-à-dire le visage de l'individu 12 entre le menton et les yeux, voire entre le menton et le front, dans l'état actif de la structure de protection 40.

Chacune des zones d'accueil faciales 425 présente une surface de confort 427 présentant une élasticité supérieure à l'élasticité de la zone d'accueil thoracique 424. Cette surface de confort 427 permet d'accueillir le visage de l'individu 12 en cas de choc de la tête de l'individu 12 avec la zone d'accueil faciale 425. La surface de confort 427 peut par exemple être en textile tissé comprenant des fibres élastiques telles que des fibres élasthanes ou être en textile tricoté en maille.

Une attache amovible 426 relie la première portion de protection frontale 423a et la deuxième portion de protection frontale 423b. Un premier élément de l'attache amovible 426 est attaché à la première portion de protection frontale 423a et un deuxième élément de l'attache amovible 423 est attaché à la deuxième portion de protection frontale 423b. Le premier élément de l'attache amovible 426 comprend un élément de fixation mâle 426a et le deuxième élément de l'attache amovible 426 comprend un élément de fixation femelle 426b. Comme cela est visible sur la figure 4, l'élément de fixation mâle 426a peut être inséré dans l'élément de fixation femelle 426b fermant ainsi l'attache amovible 426 pour relier la première portion de protection frontale 423a et la deuxième portion de protection frontale 423b.

Lorsque le système de protection 10 est utilisé, l'attache amovible 426 est fermée. L'attache amovible 426 permet alors d'éviter que la première portion de protection frontale 423a et la deuxième portion de protection frontale 423b ne s'écartent d'une distance supérieure à la largeur de la tête de l'individu 12. Cela évite ainsi que la tête de l'individu 12 se retrouve sans protection et viennent percuter un obstacle. L'attache amovible permet ainsi de garantir une bonne protection de l'individu 12.

Le système de protection 10 peut également comprendre un organe de retenue frontal solidarisé à la première portion de protection frontale 423a et à la deuxième portion de protection frontale 423b. L'organe de retenue frontal s'étend selon deux dimensions sous la forme d'une nappe, et est souple. L'organe de retenue frontal peut par exemple être formé par un filet ou un tissu.

A l'état inactif de la structure de protection 40, l'organe de retenue frontal s'étend entre la première portion de protection frontale 423a et la deuxième portion de protection frontale 423b, et donc entre le premier élément de revêtement frontal 223a et le deuxième élément de revêtement frontal 223b.

A l'état actif de la structure de protection 40, l'organe de retenue frontal est tendu entre la première portion de protection frontale 423a et la deuxième portion de protection frontale 423b, et forme un panneau de protection frontale. Ce panneau de protection frontale permet de réceptionner la tête de l'individu 12 en cas d'accident et d'éviter ainsi que la tête de l'individu 12 ne passe entre la première portion de protection frontale 423a et la deuxième portion de protection frontale 423b.

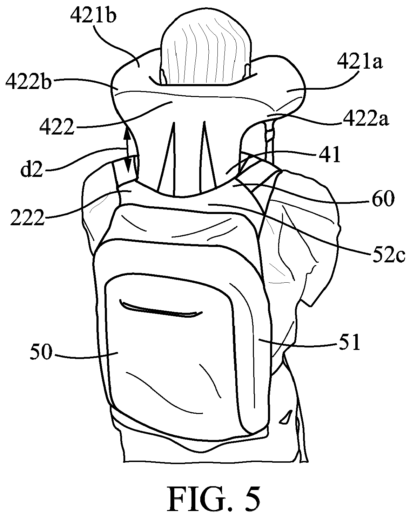

Comme représenté sur la figure 5, la première portion de protection latérale 421a et la deuxième portion de protection latérale 421b comprennent chacune une extrémité arrière, opposée à l'extrémité avant, et la portion de protection occipitale 422 présente une extrémité droite 422a et une extrémité gauche 422b. La portion de protection occipitale 422 s'étend selon la direction transversale et prend la forme d'un manchon tubulaire. L'extrémité droite 422a de la portion de protection occipitale 422 est reliée à l'extrémité arrière de la première portion de protection latérale 421a et l'extrémité gauche 422b de la portion de protection occipitale 422 est reliée à l'extrémité arrière de la deuxième portion de protection latérale 421b.

La partie de protection occipitale est située à une distance d2 de l'élément de revêtement dorsal supérieur 222 à l'état actif de la structure de protection 40. Cette distance d2 permet à la structure de protection d'atteindre l'arrière de la tête de l'individu 12, au-dessus des vertèbres cervicales.

La portion de protection occipitale 422 est reliée au coussin de protection dorsal 41. A l'état actif de la structure de protection 40, le coussin de protection dorsal 41 s'étend verticalement en regard du dos de l'individu 12, en étant en partie dans la partie d'équipement dorsal 21. La partie d'équipement dorsal 21 est alors déformée et prend la forme du coussin de protection dorsal 41. Dans l'exemple représenté, le coussin de protection dorsal 41 prend la forme de trois manchons tubulaires. Les manchons tubulaires sont en partie logés dans la partie d'équipement dorsal 21. La partie d'équipement dorsale 21 comprend trois tubes 21a, 21b, 21c représentés à la figure 3, chaque tube 21a, 21b, 21c renfermant un manchon tubulaire du coussin de protection dorsal 41.

Un voile peut être prévu pour venir recouvrir les parties des manchons tubulaires du coussin de protection dorsal 41 qui ne sont pas logés dans la partie d'équipement dorsale 21, afin de masquer les manchons tubulaires du coussin de protection dorsal 41.

Un organe de retenue dorsal solidarisé au coussin de protection dorsal 41 peut également être prévu. En particulier, l'organe de retenu dorsal peut être solidarisé aux manchons tubulaires du coussin de protection dorsal 41. L'organe de retenue dorsal s'étend selon deux dimensions sous la forme d'une nappe, et est souple. L'organe de retenue dorsal peut par exemple être formé par un filet ou un tissu.

A l'état inactif de la structure de protection 40, l'organe de retenue dorsal est replié sur la partie d'équipement dorsal 21.

A l'état actif de la structure de protection 40, l'organe de retenue dorsal est tendu entre les manchons tubulaires du coussin de protection dorsal 41 et forme un panneau de protection dorsale. Ce panneau de protection dorsale permet de réceptionner la tête de l'individu 12 en cas d'accident, et d'éviter ainsi que la tête de l'individu ne passe entre les manchons tubulaires du coussin de protection dorsal 41.

Le coussin de protection dorsal 41, les première et deuxième portions de protection latérales 421a 421b, la portion de protection occipitale 422 et les première et deuxième portions de protection frontales 423a, 423b sont tous reliés et forment une enveloppe délimitant une unique chambre intérieure. La chambre intérieure est vide à l'état inactif de la structure de protection 40 et est remplie d'un gaz à l'état actif de la structure de protection 40.

Lorsqu'une situation d'accident est détectée, le gaz remplissant la chambre intérieure permet de déployer simultanément le coussin de protection dorsal 41, les première et deuxième portions de protection latérales 421a 421b, la portion de protection occipitale 422 et les première et deuxième portions de protection frontales 423a, 423b.

Dans une variante non représentée, le coussin de protection dorsal 41, les première et deuxième portions de protection latérales 421a 421b, la portion de protection occipitale 422 et les première et deuxième portions de protection frontales 423a, 423b peuvent être indépendantes et former chacune une enveloppe délimitant une chambre intérieure. Lorsqu'une situation d'accident est détectée, la chambre intérieure délimitée par chacune des enveloppes est gonflée séparément.

Le système de protection 10 comprend au moins un réservoir de gaz et un dispositif d'actionnement 14 connecté au réservoir de gaz et à la structure de protection 40. Le dispositif d'actionnement 14 est configuré pour détecter une situation d'accident et pour laisser la structure de protection 40 dans l'état inactif tant qu'aucune situation d'accident n'est détectée. La structure de protection 40 est alors isolée par rapport au réservoir de gaz. Et le dispositif d'actionnement 14 est configuré pour faire passer la structure de protection 40 dans l'état actif lorsqu'une situation d'accident est détectée, la structure de protection 40 est alors en communication de fluide avec le réservoir.

Le sac à dos 50 comprend un étui 60 s'étendant sur la partie d'équipement supérieure 22. En particulier, l'étui 60 s'étend sur les bretelles droite et gauche 52a, 52b du sac à dos 50 et sur la bande dorsale 52c.

L'étui 60 peut présenter un état fermé, comme sur la figure 1 et peut présenter un état ouvert, comme sur les figures 2 à 7.

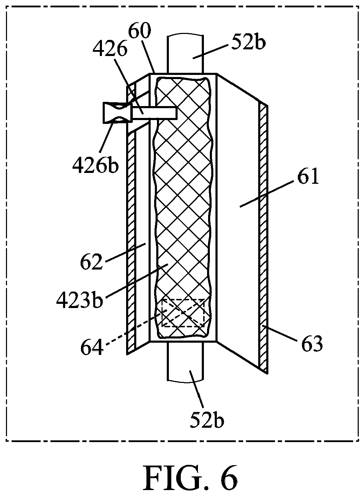

Une vue détaillée de l'étui 60 est présentée sur la figure 6. L'étui comprend des rabats 61, 62. A l'état fermé de l'étui 60, les rabats 61, 62 sont solidarisés l'un à l'autre par l'intermédiaire d'une couture fusible 63. Les rabats 61, 62 délimitent alors un espace de réception. A l'état inactif de la structure de protection 40, l'étui 60 est dans l'état fermé et le coussin de protection supérieur 42 comprenant les première et deuxième portions de protection latérales 421a, 421b, la portion de protection occipitale 422, et les première et deuxième portions de protection frontales 423a, 423b est placé dans l'espace de réception.

A l'état ouvert de l'étui 60, les rabats 61, 62 sont écartés l'un de l'autre et ouvrent l'espace de réception et ouvrent l'espace de réception. A l'état actif de la structure de protection 40, l'étui 60 est dans l'état ouvert et permet de laisser passer le coussin de protection supérieur 42.

L'écartement des rabats est provoqué par le déploiement de la structure de protection 40 en passant de l'état inactif à l'état actif. En effet, lorsque la structure de protection 40 est déployée, le coussin de protection supérieur 42 est gonflé et une pression est exercée sur les rabats, et sur la couture fusible 63. La couture fusible 63 est configurée pour rompre sous cette pression. L'étui passe alors de son état fermé à son état ouvert simultanément avec le passage de l'état inactif à l'état actif de la structure de protection 40.

Dans une variante, les rabats 61, 62 pourraient être solidarisés par d'autres moyens de solidarisation tels qu'un adhésif, des crochets et des boucles (velcro0) ou un bouton pression.

La structure de protection comprend des points de fixation 64 à l'étui 60. Ces points de fixation 64 permettent d'attacher la structure de protection 40 à l'étui. Ainsi, la structure de fixation peut se détacher de l'étui autour de ces points de fixation 64 pour venir se positionner en regard des différentes parties du corps de l'individu 12, mais un certain maintien de la structure de protection 40 sur l'équipement 20 est conservé par l'intermédiaire des points de fixation 64.

La zone d'accueil thoracique 424 de la première portion de protection frontale 423a est attachée au premier élément de revêtement frontal 223a via un point de fixation. De même, la zone d'accueil thoracique 424 de la deuxième portion de protection frontale 423b est attachée au deuxième élément de revêtement frontal 223b via un point de fixation.

Dans une variante non représentée, l'équipement 20 pourrait former l'étui 60. La structure de protection 40 pourrait alors être positionnée dans l'équipement 20. En particulier, la première portion de protection latérale 421a pourrait être logée dans la bretelle droite 52a du sac à dos 50 et la deuxième portion de protection latérale 421b pourrait être logée dans la bretelle gauche 52b du sac à dos 50. Les bretelles droite et gauche 52a, 52b comprendraient alors chacune les rabats 61, 62.

Dans une autre variante non représentée, la structure de protection 40 pourrait être positionnée directement sur l'équipement 20, sans être positionnée dans un étui. La structure de protection 40 pourrait par exemple être collée à l'équipement 20 ou solidarisée par des boucles (velcro0) ou un bouton pression. En particulier, la structure de protection pourrait être positionnée sur les bretelles droite et gauche 52a, 52b du sac à dos 50 et sur la bande dorsale 52c.

Le système de protection 10 peut être utilisé pour protéger l'individu portant le système de protection 10. L'utilisation prévoit que tant qu'aucune situation d'accident n'est détectée, la structure de protection 40 reste dans l'état inactif. La structure de protection 40 est alors dégonflée et repliée sur l'équipement 20. En particulier, le coussin de protection dorsal 41 est replié sur la partie d'équipement dorsale 21 et le coussin de protection supérieur 42 est replié sur la partie d'équipement supérieure 22. Et l'utilisation prévoit que lorsqu'une situation d'accident est détectée, la structure de protection 40 passe dans l'état actif.

## Revendications

1. Système de protection (10) destiné à être porté par un individu (12) comprenant :
- un équipement (20) comportant une partie d'équipement supérieure (22) configurée pour s'étendre en regard d'une partie du buste de l'individu (12), la partie d'équipement supérieure (22) comprenant un premier élément de revêtement scapulaire (221a) configuré pour être positionné en regard d'une des épaules de l'individu (12), un deuxième élément de revêtement scapulaire (221b) configuré pour être positionné en regard de l'autre des épaules de l'individu (12), un premier élément de revêtement frontal (223a) et un deuxième élément de revêtement frontal (223b) configurés pour s'étendre en regard du thorax de l'individu (12), et un élément de revêtement dorsal supérieur (222) configuré pour venir s'étendre en regard du haut du dos de l'individu (12),
- une structure de protection (40) gonflable comportant un coussin de protection supérieur (42) comprenant au moins une première portion de protection latérale (421a), une première portion de protection frontale (423a) reliée à la première portion de protection latérale (421a), une deuxième portion de protection latérale (421b), une deuxième portion de protection frontale (423b) reliée à la deuxième portion de protection latérale (421b), et au moins une portion de protection occipitale (422) reliée à la première portion de protection latérale (421a) et à la deuxième portion de protection latérale (421b),
dans lequel la structure de protection présente :
• tant qu'aucune situation d'accident n'est détectée, un état inactif dans lequel la structure de protection (40) est dégonflée et repliée sur l'équipement (20), la première portion de protection latérale (421a) étant repliée sur le premier élément de revêtement scapulaire (221a), la deuxième portion de protection latérale (421b) étant repliée sur le deuxième élément de revêtement scapulaire (221b), la première portion de protection frontale (423a) étant repliée sur le premier élément de revêtement frontal (223a), la deuxième portion de protection frontale (423b) étant repliée sur le deuxième élément de revêtement frontal (223b) et la portion de protection occipitale (422) étant repliée sur l'élément de revêtement dorsal supérieur (222);
• lorsqu'une situation d'accident est détectée, un état actif dans lequel la structure de protection (40) est gonflée, la première portion de protection latérale (421a) et la deuxième portion de protection latérale (421b) s'étendant principalement selon une direction longitudinale en regard l'une de l'autre, la première portion de protection latérale (421a) et la deuxième portion de protection latérale (421b) étant configurées pour s'étendre de chaque côté de la tête de l'individu (12) pour protéger l'individu (12) selon une direction transversale, la première portion de protection frontale (423a) et la deuxième portion de protection frontale (423b) s'étendant principalement selon une direction verticale, en regard l'une de l'autre, la première portion de protection frontale (423a) et la deuxième portion de protection frontale (423b) étant configurées pour s'étendre en regard du thorax et de la tête de l'individu (12), et la portion de protection occipitale (422) étant configurée pour s'étendre selon la direction transversale entre la première portion de protection latérale (421a) et la deuxième portion de protection latérale (421b), derrière la tête de l'individu (12),
dans lequel la structure de protection est constituée de manchons tubulaires à l'état actif de la structure de protection, la structure de protection comprenant :
- un premier manchon de protection latérale formant la première portion de protection latérale,
- un deuxième manchon de protection latérale formant la deuxième portion de protection latérale,
- un premier manchon de protection frontale formant la première portion de protection frontale,
- un deuxième manchon de protection frontale formant la deuxième portion de protection frontale,
**caractérisé en ce que**, à l'état actif, le premier manchon de protection latérale est agencé à angle droit avec le premier manchon de protection frontale, le deuxième manchon de protection latérale est agencé à angle droit avec le deuxième manchon de protection frontale, le premier manchon de protection latérale est positionné à distance du premier élément de revêtement scapulaire (221a), le deuxième manchon de protection latérale est positionné à distance du deuxième élément de revêtement scapulaire (221b), et la portion de protection occipitale est positionnée à distance de l'élément de revêtement dorsal supérieur (222),
de sorte que les premier et deuxième manchons de protection frontale présente chacun une zone d'accueil thoracique (424) configurée pour s'étendre à l'état actif en regard d'une partie du thorax de l'individu (12) et une zone d'accueil faciale (425) configurée pour s'étendre à l'état actif en regard d'une partie du visage de l'individu (12), la zone d'accueil thoracique (424) de la première portion de protection frontale (423a) étant attachée au premier élément de revêtement frontal (223a) et la zone d'accueil thoracique (424) de la deuxième portion de protection frontale (423b) étant attachée au deuxième élément de revêtement frontal (223b), la zone d'accueil faciale (425) de la première portion de protection frontale (423a) étant agencée à distance du premier élément de revêtement frontal (223a) et la zone d'accueil faciale (425) de la deuxième portion de protection frontale (423b) étant agencée à distance du deuxième élément de revêtement frontal (223b),
et **en ce que** le système de protection (10) comprend en outre une attache amovible (426) reliant la première portion de protection frontale (423a) et la deuxième portion de protection frontale (423b).

2. Système de protection (10) selon la revendication 1, dans lequel la structure de protection (40) comprend au moins un coussin de protection dorsal (41) configuré pour s'étendre à l'état actif en regard d'une partie du dos de l'individu (12), et dans lequel l'équipement (20) comporte une partie d'équipement dorsale (21) configurée pour s'étendre en regard du dos de l'individu (12), le coussin de protection dorsal (41) étant replié sur la partie d'équipement dorsale (21) à l'état inactif de la structure de protection (40).

3. Système de protection (10) selon la revendication 2, dans lequel l'équipement (20) est un sac à dos (50) comprenant une poche dorsale (51), et des bretelles (52a, 52b) attachées à la poche dorsale (51), la partie d'équipement supérieure (22) s'étendant au moins sur une partie des bretelles (52a, 52b), et la partie d'équipement dorsale (21) s'étendant au moins sur une partie de la poche dorsale (51).

4. Système de protection (10) selon l'une des revendications 1 à 3, comprenant un organe de retenue frontal solidarisé à la première portion de protection frontale (423a) et à la deuxième portion de protection frontale (423b), l'organe de retenue frontal étant configuré pour être tendu entre la première portion de protection frontale (423a) et la deuxième portion de protection frontale (423b), et pour former un panneau de protection frontale, à l'état actif de la structure de protection (40).

5. Système de protection selon l'une des revendications 1 à 4, dans lequel pour chacune des première et deuxième portions de protection frontales (423a, 423b), la zone d'accueil faciale (425) présente une surface de confort (427) présentant une élasticité supérieure à l'élasticité de la zone d'accueil thoracique (424).

6. Système de protection (10) selon l'une des revendications 1 à 5, dans lequel la structure de protection (40) forme une enveloppe délimitant une unique chambre intérieure, la chambre intérieure étant remplie d'un gaz dans l'état actif de la structure de protection (40), et étant vide dans l'état inactif de la structure de protection.

7. Système de protection (10) selon l'une des revendications 1 à 6, comprenant au moins un réservoir de gaz et un dispositif d'actionnement (14) connecté au réservoir de gaz et à la structure de protection (40), le dispositif d'actionnement (14) étant configuré pour détecter une situation d'accident et pour laisser la structure de protection (40) dans l'état inactif tant qu'aucune situation d'accident n'est détectée, la structure de protection (40) étant isolée par rapport au réservoir de gaz, et faire passer la structure de protection (40) dans l'état actif lorsqu'une situation d'accident est détectée, la structure de protection (40) étant en communication de fluide avec le réservoir.

8. Système de protection selon l'une des revendications 1 à 7, dans lequel l'équipement comprend un étui (60) s'étendant sur la partie d'équipement supérieure (22), l'étui (60) comprenant des rabats (61, 62) et étant configuré pour présenter un état fermé dans lequel les rabats (61, 62) sont solidarisés l'un à l'autre pour délimiter un espace de réception, et un état ouvert dans lequel les rabats (61, 62) sont écartés l'un de l'autre pour ouvrir l'espace de réception, et dans lequel :
- dans l'état inactif de la structure de protection (40), l'étui (60) est dans l'état fermé et le coussin de protection supérieur (42) est placé dans l'espace de réception, et
- dans l'état actif de la structure de protection (40), l'étui est dans l'état ouvert et laisse passer le coussin de protection supérieur (42).

9. Utilisation d'un système de protection (10) selon l'une quelconque des revendications 1 à 8 pour protéger un individu portant le système de protection (10), l'utilisation prévoyant de :
- tant qu'aucune situation d'accident n'est détectée, laisser la structure de protection (40) dans l'état inactif, dans lequel le coussin de protection supérieur (42) est replié sur la partie d'équipement supérieure (22),
- lorsqu'une situation d'accident est détectée, faire passer la structure de protection (40) dans l'état actif dans lequel la structure de protection (40) est gonflée, la première portion de protection latérale (421a) et la deuxième portion de protection latérale (421b) s'étendant de chaque côté de la tête de l'individu (12) pour protéger l'individu (12) selon la direction transversale, la première portion de protection latérale (421a) étant positionnée à distance du premier élément de revêtement scapulaire (221a) et la deuxième portion de protection latérale (421b) étant positionnée à distance du deuxième élément de revêtement scapulaire (221b), et la première portion de protection frontale (423a) et la deuxième portion de protection frontale (423b) s'étendant principalement selon la direction verticale, en regard l'une de l'autre, la zone d'accueil thoracique (424) de chacune de la première portion de protection frontale (423a) et de la deuxième portion de protection frontale (423b) s'étendant en regard d'une partie du thorax de l'individu (12) et la zone d'accueil faciale (425) de chacune de la première portion de protection frontale (423a) et de la deuxième portion de protection frontale (423b) s'étendant en regard d'une partie du visage de l'individu (12), la portion de protection occipitale s'étendant selon la direction transversale entre la première portion de protection latérale (421a) et la deuxième portion de protection latérale (421b), derrière la tête de l'individu (12), à distance de l'élément de revêtement dorsal supérieur (222), l'attache amovible (426) reliant la première portion de protection frontale (423a) et la deuxième portion de protection frontale (423b).

## Patentansprüche

1. Schutzsystem (10), das dazu bestimmt ist, von einer Person (12) getragen zu werden, umfassend:
- eine Ausrüstung (20), umfassend einen oberen Ausrüstungsteil (22), der dazu ausgebildet ist, sich hinsichtlich eines Teils des Oberkörpers der Person (12) zu erstrecken, wobei der obere Ausrüstungsteil (22) ein erstes Schulterbedeckungselement (221a) umfasst, das dazu ausgebildet ist, hinsichtlich einer der Schultern der Person (12) positioniert zu werden, ein zweites Schulterbedeckungselement (221b), das dazu ausgebildet ist, hinsichtlich der anderen Schulter der Person (12) positioniert zu werden, ein erstes Frontbedeckungselement (223a) und ein zweites Frontbedeckungselement (223b), die dazu ausgebildet sind, sich hinsichtlich des Brustkorbs der Person (12) zu erstrecken, und ein oberes Rückenbedeckungselement (222), das dazu ausgebildet ist, sich hinsichtlich des oberen Rückens der Person (12) zu erstrecken,
- eine aufblasbare Schutzstruktur (40), umfassend ein oberes Schutzkissen (42), das wenigstens einen ersten seitlichen Schutzabschnitt (421a), einen ersten Frontschutzabschnitt (423a), der mit dem ersten seitlichen Schutzabschnitt (421a) verbunden ist, und einen zweiten seitlichen Schutzabschnitt (421b) umfasst, einen zweiten Frontschutzabschnitt (423b), der mit dem zweiten seitlichen Schutzabschnitt (421b) verbunden ist, und wenigstens einen okzipitalen Schutzabschnitt (422), der mit dem ersten seitlichen Schutzabschnitt (421a) und dem zweiten seitlichen Schutzabschnitt (421b) verbunden ist,
wobei die Schutzstruktur folgendes aufweist:
• solange keine Unfallsituation erkannt wird, einen inaktiven Zustand, in dem die Schutzstruktur (40) entleert und auf die Ausrüstung (20) gefaltet ist, wobei der erste Seitenschutzabschnitt (421a) auf das erste Schulterbedeckungselement (221a) gefaltet ist und der zweite Seitenschutzabschnitt (421b) auf das zweite Schulterbedeckungselement (221b) gefaltet ist, wobei der erste Frontschutzabschnitt (423a) auf das erste vordere Bedeckungselement (223a) gefaltet ist, der zweite Frontschutzabschnitt (423b) auf das zweite vordere Bedeckungselement (223b) gefaltet ist und der okzipitale Schutzabschnitt (422) auf das obere Rückenbedeckungselement (222) gefaltet ist;
• wenn eine Unfallsituation erkannt wird, einen aktiven Zustand, in dem die Schutzstruktur (40) aufgeblasen wird, wobei sich der erste seitliche Schutzabschnitt (421a) und der zweite seitliche Schutzabschnitt (421b) hauptsächlich in einer Längsrichtung hinsichtlich einander erstrecken, wobei der erste seitliche Schutzabschnitt (421a) und der zweite seitliche Schutzabschnitt (421b) dazu ausgebildet sind, sich auf jeder Seite des Kopfes der Person (12) zu erstrecken, um die Person (12) in einer Querrichtung zu schützen, wobei sich der erste Frontschutzabschnitt (423a) und der zweite Frontschutzabschnitt (423b) hinsichtlich einander hauptsächlich in einer vertikalen Richtung erstrecken, wobei der erste Frontschutzabschnitt (423a) und der zweite Frontschutzabschnitt (423b) dazu ausgebildet sind, sich hinsichtlich des Brustkorbs und des Kopfes der Person (12) zu erstrecken, und der okzipitale Schutzabschnitt (422) dazu ausgebildet ist, sich in Querrichtung zwischen dem ersten seitlichen Schutzabschnitt (421a) und dem zweiten seitlichen Schutzabschnitt (421b) unterhalb des Kopfes der Person (12) zu erstrecken,
wobei die Schutzstruktur aus röhrenförmigen Hülsen im aktiven Zustand der Schutzstruktur besteht, wobei die Schutzstruktur umfasst:
- eine erste Seitenschutzhülse, die den ersten Seitenschutzabschnitt bildet,
- eine zweite Seitenschutzhülse, die den zweiten Seitenschutzabschnitt bildet,
- eine erste Frontschutzhülse, die den ersten Frontschutzabschnitt bildet,
- eine zweite Frontschutzhülse, die den zweiten Frontschutzabschnitt bildet,
- **dadurch gekennzeichnet, dass** im aktiven Zustand die erste Seitenschutzhülse im rechten Winkel zur ersten Frontschutzhülse angeordnet ist, die zweite Seitenschutzhülse im rechten Winkel zur zweiten Frontschutzhülse angeordnet ist, die erste Seitenschutzhülse in einem Abstand zu dem ersten Schulterbedeckungselement (221a) positioniert ist, die zweite Seitenschutzhülse in einem Abstand zu dem zweiten Schulterbedeckungselement (221b) positioniert ist, und der okzipitale Schutzabschnitt in einem Abstand zu dem oberen Rückenbedeckungselement (222) positioniert ist, so dass die erste und die zweite Frontschutzhülse jeweils einen Brustaufnahmebereich (424) aufweisen, der dazu ausgebildet ist, sich im aktiven Zustand hinsichtlich eines Teils des Brustkorbs der Person (12) zu erstrecken, und einen Gesichtsaufnahmebereich (425) aufweisen, der dazu ausgebildet ist, sich im aktiven Zustand hinsichtlich eines Teils des Gesichts der Person (12) zu erstrecken, wobei der Brustaufnahmebereich (424) des ersten Frontschutzabschnitts (423a) an dem ersten Frontbedeckungselement (223a) befestigt ist und der Brustaufnahmebereich (424) des zweiten Frontschutzabschnitts (423b) an dem zweiten Frontbedeckungselement (223b) befestigt ist, wobei der Gesichtsaufnahmebereich (425) des ersten Frontschutzabschnitts (423a) in einem Abstand zu dem ersten Frontbedeckungselement (223a) und der Gesichtsaufnahmebereich (425) des zweiten Frontschutzteils (423b) in einem Abstand zu dem zweiten Frontbedeckungselement (223b) angeordnet ist, und wobei das Schutzsystem (10) ferner eine lösbare Klammer (426) umfasst, die den ersten Frontschutzabschnitt (423a) und den zweiten Frontschutzabschnitt (423b) verbindet.

2. Schutzsystem (10) nach Anspruch 1, wobei die Schutzstruktur (40) wenigstens ein Rückenschutzkissen (41) umfasst, das dazu ausgebildet ist, sich im aktiven Zustand hinsichtlich eines Teils des Rückens der Person (12) zu erstrecken, und wobei die Ausrüstung (20) einen Rückenausrüstungsteil (21) aufweist, der dazu ausgebildet ist, sich hinsichtlich des Rückens der Person (12) zu erstrecken, wobei das Rückenschutzkissen (41) im inaktiven Zustand der Schutzstruktur (40) auf den Rückenausrüstungsteil (21) gefaltet ist.

3. Schutzsystem (10) nach Anspruch 2, wobei die Ausrüstung (20) ein Rucksack (50) ist, der eine Rückentasche (51) und an der Rückentasche (51) befestigte Schultergurte (52a, 52b) aufweist, wobei sich der obere Ausrüstungsteil (22) wenigstens über einen Teil der Schultergurte (52a, 52b) erstreckt, und sich der Rückenausrüstungsteil (21) wenigstens über einen Teil der Rückentasche (51) erstreckt.

4. Schutzsystem (10) nach einem der Ansprüche 1 bis 3, umfassend ein Fronthalteelement, das fest mit dem ersten Frontschutzabschnitt (423a) und dem zweiten Frontschutzabschnitt (423b) verbunden ist, wobei das Fronthalteelement dazu ausgebildet ist, zwischen dem ersten Frontschutzabschnitt (423a) und dem zweiten Frontschutzabschnitt (423b) gespannt zu werden und im aktiven Zustand der Schutzstruktur (40) eine vordere Schutzplatte zu bilden.

5. Schutzsystem nach einem der Ansprüche 1 bis 4, wobei bei jedem der ersten und zweiten Frontschutzabschnitte (423a, 423b) der Gesichtsaufnahmebereich (425) eine Komfortfläche (427) aufweist, die eine Elastizität aufweist, die größer ist als die Elastizität des Brustaufnahmebereichs (424).

6. Schutzsystem (10) nach einem der Ansprüche 1 bis 5, wobei die Schutzstruktur (40) eine Hülle bildet, die eine einzelne innere Kammer begrenzt, wobei die innere Kammer im aktiven Zustand der Schutzstruktur (40) mit einem Gas gefüllt ist und im inaktiven Zustand der Schutzstruktur leer ist.

7. Schutzsystem (10) nach einem der Ansprüche 1 bis 6, umfassend wenigstens einen Gasbehälter und eine Betätigungsvorrichtung (14), die mit dem Gasbehälter und der Schutzstruktur (40) verbunden ist, wobei die Betätigungsvorrichtung (14) dazu ausgebildet ist, eine Unfallsituation zu erkennen und die Schutzstruktur (40) im inaktiven Zustand zu belassen, solange keine Unfallsituation erkannt wird, wobei die Schutzstruktur (40) von dem Gasbehälter isoliert ist, und die Schutzstruktur (40) in den aktiven Zustand überführt wird, wenn eine Unfallsituation erkannt wird, wobei die Schutzstruktur (40) in Fluidverbindung mit dem Behälter steht.

8. Schutzsystem nach einem der Ansprüche 1 bis 7, wobei die Ausrüstung eine Hülle (60) umfasst, die sich über den oberen Ausrüstungsteil (22) erstreckt, wobei die Hülle (60) Klappen (61, 62) umfasst, dazu ausgebildet, einen geschlossenen Zustand aufzuweisen, in dem die Klappen (61, 62) fest miteinander verbunden sind, um einen Aufnahmeraum zu begrenzen, und einen offenen Zustand, in dem die Klappen (61, 62) voneinander wegbewegt werden, um den Aufnahmeraum zu öffnen, und wobei:
- im inaktiven Zustand der Schutzstruktur (40) die Hülle (60) geschlossen ist und das obere Schutzkissen (42) im Aufnahmeraum angeordnet ist, und
- im aktiven Zustand der Schutzstruktur (40) sich die Hülle im offenen Zustand befindet und das obere Schutzkissen (42) passieren lässt.

9. Verwendung eines Schutzsystems (10) nach einem der Ansprüche 1 bis 8, um eine Person zu schützen, die das Schutzsystem (10) trägt, wobei die Verwendung vorsieht, dass:
- solange keine Unfallsituation erkannt wird, die Schutzstruktur (40) im inaktiven Zustand belassen wird, in dem das obere Schutzkissen (42) auf den oberen Ausrüstungsteil (22) gefaltet ist,
- wenn eine Unfallsituation erkannt wird, die Schutzstruktur (40) in den aktiven Zustand überführt wird, in dem die Schutzstruktur (40) aufgeblasen ist, wobei sich der erste seitliche Schutzabschnitt (421a) und der zweite seitliche Schutzabschnitt (421b) auf jeder Seite des Kopfes der Person (12) erstrecken, um die Person (12) in der Querrichtung zu schützen, wobei der erste Seitenschutzabschnitt (421a) in einem Abstand zu dem ersten Schulterbedeckungselement (221a) und der zweite Seitenschutzabschnitt (421b) in einem Abstand zu dem zweiten Schulterbedeckungselement (221b) positioniert ist, und wobei sich der erste Frontschutzabschnitt (423a) und der zweite Frontschutzabschnitt (423b) hinsichtlich einander hauptsächlich in der vertikalen Richtung erstrecken, wobei sich der Brustaufnahmebereich (424) von jedem des ersten Frontschutzabschnitts (423a) und des zweiten Frontschutzabschnitts (423b) hinsichtlich eines Teils des Brustkorbs der Person (12) erstreckt und sich der Gesichtsaufnahmebereich (425) von jedem des ersten Frontschutzabschnitts (423a) und des zweiten Frontschutzabschnitts (423b) hinsichtlich eines Teils des Gesichts der Person (12) erstreckt, wobei sich der okzipitale Schutzabschnitt in Querrichtung zwischen dem ersten seitlichen Schutzabschnitt (421a) und dem zweiten seitlichen Schutzabschnitt (421b) hinter dem Kopf der Person (12) in einem Abstand zu der oberen Rückenbedeckung (222) erstreckt, wobei die lösbare Befestigung (426) den ersten Frontschutzabschnitt (423a) und den zweiten Frontschutzabschnitt (423b) miteinander verbindet.

## Claims

1. A protection system (10) intended to be worn by an individual (12) comprising:
- equipment (20) including an upper equipment part (22) configured to extend opposite part of the bust of the individual (12), the upper equipment part (22) comprising a first scapular covering element (221a) configured to be positioned opposite one of the shoulders of the individual (12), a second scapular covering element (221b) configured to be positioned opposite the other of the shoulders of the individual (12), a first frontal covering element (223a) and a second frontal covering element (223b) configured to extend opposite the thorax of the individual (12), and an upper back covering element (222) configured to extend opposite the upper back of the individual (12),
- an inflatable protection structure (40) including an upper protection cushion (42) comprising at least a first side protection portion (421a), a first frontal protection portion (423a) connected to the first side protection portion (421a), a second side protection portion (421b), a second frontal protection portion (423b) connected to the second side protection portion (421b), and
at least one occipital protection portion (422) connected to the first side protection portion (421a) and to the second side protection portion (421b), wherein the protection structure has:
- as long as no accident situation is detected, an inactive state wherein the protection structure (40) is deflated and folded over the equipment (20), the first side protection portion (421a) being folded over the first scapular covering element (221a), the second side protection portion (421b) being folded over the second scapular covering element (221b), the first frontal protection portion (423a) being folded over the first frontal covering element (223a), the second frontal protection portion (423b) being folded over the second frontal covering element (223b) and the occipital protection portion (422) being folded over the upper back covering element (222);
- when an accident situation is detected, an active state wherein the protection structure (40) is inflated, the first side protection portion (421a) and the second side protection portion (421b) extending mainly in a longitudinal direction opposite each other, the first side protection portion (421a) and the second side protection portion (421b) being configured to extend on each side of the head of the individual (12) to protect the individual (12) in a transverse direction, the first frontal protection portion (423a) and the second frontal protection portion (423b) extending mainly in a vertical direction, opposite each other, the first frontal protection portion (423a) and the second frontal protection portion (423b) being configured to extend opposite the thorax and the head of the individual (12), and the occipital protection portion (422) being configured to extend in the transverse direction between the first side protection portion (421a) and the second side protection portion (421b), behind the head of the individual (12),
wherein the protection structure consists of tubular sleeves in the active state of the protection structure, the protection structure comprising:
- a first side protection sleeve forming the first side protection portion,
- a second side protection sleeve forming the second side protection portion,
- a first frontal protection sleeve forming the first frontal protection portion,
- a second frontal protection sleeve forming the second frontal protection portion, **characterised in that**, in the active state, the first side protection sleeve is arranged at right angles to the first front protection sleeve, the second side protection sleeve is arranged at right angles to the second front protection sleeve, the first side protection sleeve is positioned at a distance from the first scapular covering element (221a), the second side protection portion sleeve is positioned at a distance from the second scapular covering element (221b), and the occipital protection portion is positioned at a distance from the upper back covering element (222), so that the first and second frontal protection sleeves each have a thoracic reception area (424) configured to extend in the active state opposite part of the thorax of the individual (12) and a facial reception area (425) configured to extend in the active state opposite part of the face of the individual (12), the thoracic reception area (424) of the first frontal protection portion (423a) being fastened to the first frontal covering element (223a) and the thoracic reception area (424) of the second frontal protection portion (423b) being fastened to the second frontal covering element (223b), the facial reception area (425) of the first frontal protection portion (423a) being arranged at a distance from the first frontal covering element (223a) and the facial reception area (425) of the second frontal protection portion (423b) being arranged at a distance from the second frontal covering element (223b),
and **in that** the protection system (10) further comprises a removable fastener (426) connecting the first frontal protection portion (423a) and the second frontal protection portion (423b).

2. The protection system (10) according to claim 1, wherein the protection structure (40) comprises at least one back protection cushion (41) configured to extend in the active state opposite part of the back of the individual (12), and wherein the equipment (20) includes a back equipment part (21) configured to extend opposite the back of the individual (12), the back protection cushion (41) being folded over the back equipment part (21) in the inactive state of the protection structure (40).

3. The protection system (10) according to claim 2, wherein the equipment (20) is a backpack (50) comprising a back pocket (51), and shoulder straps (52a, 52b) fastened to the back pocket (51), the upper equipment part (22) extending at least over part of the shoulder straps (52a, 52b), and the back equipment part (21) extending at least over part of the back pocket (51).

4. The protection system (10) according to one of claims 1 to 3, comprising a frontal retaining member secured to the first frontal protection portion (423a) and to the second frontal protection portion (423b), the frontal retaining member being configured to be stretched between the first frontal protection portion (423a) and the second frontal protection portion (423b), and to form a front protection panel, in the active state of the protection structure (40).

5. The protection system according to one of claims 1 to 4, wherein for each of the first and second frontal protection portions (423a, 423b), the facial reception area (425) has a comfort surface (427) having an elasticity greater than the elasticity of the thoracic reception area (424).

6. The protection system (10) according to one of claims 1 to 5, wherein the protection structure (40) forms an envelope delimiting a single interior chamber, the interior chamber being filled with a gas in the active state of the protection structure (40), and being empty in the inactive state of the protection structure.

7. The protection system (10) according to one of claims 1 to 6, comprising at least one gas tank and an actuation device (14) connected to the gas tank and to the protection structure (40), the actuation device (14) being configured to detect an accident situation and to leave the protection structure (40) in the inactive state as long as no accident situation is detected, the protection structure (40) being isolated from the gas tank, and to switch the protection structure (40) into the active state when an accident situation is detected, the protection structure (40) being in fluid communication with the tank.

8. The protection system according to one of claims 1 to 7, wherein the equipment comprises a case (60) extending over the upper equipment part (22), the case (60) comprising flaps (61, 62) and being configured to have a closed state wherein the flaps (61, 62) are secured to each other to delimit a reception space, and an open state wherein the flaps (61, 62) are separated from each other to open the reception space, and wherein:
- in the inactive state of the protection structure (40), the case (60) is in the closed state and the upper protection cushion (42) is placed in the receiving space, and
- in the active state of the protection structure (40), the case is in the open state and allows the upper protection cushion (42) to pass.

9. A use of a protection system (10) according to any one of claims 1 to 8 to protect an individual wearing the protection system (10), the use providing for:
- as long as no accident situation is detected, leaving the protection structure (40) in the inactive state, wherein the upper protection cushion (42) is folded over the upper equipment part (22),
- when an accident situation is detected, switching the protection structure (40) into the active state wherein the protection structure (40) is inflated, the first side protection portion (421a) and the second side protection portion (421b) extending on each side of the head of the individual (12) to protect the individual (12) in the transverse direction, the first side protection portion (421a) being positioned at a distance from the first scapular covering element (221a) and the second side protection portion (421b) being positioned at a distance from the second scapular covering element (221b), and the first frontal protection portion (423a) and the second frontal protection portion (423b) extending mainly in the vertical direction, opposite each other, the thoracic reception area (424) of each of the first frontal protection portion (423a) and of the second frontal protection portion (423b) extending opposite part of the thorax of the individual (12) and the facial reception area (425) of each of the first frontal protection portion (423a) and of the second frontal protection portion (423b) extending opposite part of the face of the individual (12), the occipital protection portion extending in the transverse direction between the first side protection portion (421a) and the second side protection portion (421b), behind the head of the individual (12), at a distance from the upper back covering element (222),
the removable fastener (426) connecting the first frontal protection portion (423a) and the second frontal protection portion (423b).
